# EUROPEAN PATENT SPECIFICATION

(11) **EP 2 622 880 B1**
(45) Date of publication and mention of the grant of the patent: **08.06.2016**
(21) Application number: 11827845.6
(22) Date of filing: 26.09.2011
(51) Int. Cl.: H04W 4/00, G06F 9/445, H04W 76/02, H04L 29/08

(54) **METHOD, APPARATUS AND SYSTEM FOR TRANSMITTING AN APPLICATION USING A PLURALITY OF COMPUTERS**
VERFAHREN, VORRICHTUNG UND SYSTEM ZUM ÜBERTRAGEN EINER ANWENDUNG MITHILFE MEHRERER COMPUTER
PROCÉDÉ, APPAREIL ET SYSTÈME PERMETTANT DE TRANSMETTRE UNE APPLICATION À L'AIDE D'UNE PLURALITÉ D'ORDINATEURS

(30) Priority: 27.09.2010 US 386602 P
(43) Date of publication of application: 07.08.2013
(73) Proprietor: BlackBerry Limited, Waterloo, ON N2K 0A7 (CA); Brown, Michael Stephen, Waterloo, Ontario N2L 3W8 (CA); Dent, Terrill Mark, Waterloo, Ontario N2L 3W8 (CA); Little, Herbert Anthony, Waterloo, Ontario N2L 3W8 (CA)
(72) Inventor: BROWN, Michael Stephen, Waterloo, Ontario N2L 3W8 (CA); DENT, Terrill Mark, Waterloo, Ontario N2L 3W8 (CA); LITTLE, Herbert Anthony, Waterloo, Ontario N2L 3W8 (CA)
(74) Representative: MERH-IP Matias Erny Reichl Hoffmann Patentanwälte PartG mbB
(86) International application number: PCT/CA2011/001068
(87) International publication number: WO 2012/040818

(56) References cited:
- US-A1- 2005 149 564
- US-A1- 2006 212 548
- US-A1- 2008 248 834
- US-B1- 6 308 061

## Description

### FIELD

The present specification relates generally to computing devices and more particular relates to a method, apparatus and system for transmitting, installing or upgrading an application using a plurality of computers.

### BACKGROUND

The evolution of computers is currently quite active in the mobile device environment. It is now well-known to include calendaring, contacts, and messaging functions in mobile devices. More recently, there has been a veritable explosion of the number and type of applications that are configured to the unique form factors and computing environments of mobile devices.

US Patent Application US 2005/0149564 A1 discloses an apparatus, method and computer products for remote network access and management of mobile terminals. The mobile terminal executes a web server application that allows remote network devices to access the mobile terminal. In addition, the mobile device executes a content engine that provides the ability to access databases, services and devices associated with the mobile terminal.

US Patent Application US 2008/0248834 A1 discloses a mobile device which may comprise an interface to establish a connection to a terminal and one or more browser based applications to be run locally on the mobile device. The mobile device may serve a browser based user interface to a browser of the terminal via the connection for interacting with the applications on the mobile device.

### BRIEF DESCRIPTION OF THE DRAWINGS

For a better understanding of the various embodiments described herein and to show more clearly how they may be carried into effect, reference will now be made, by way of example only, to the accompanying drawings in which:
Figure 1 is a schematic representation of a system for accessing an application across a plurality of computers.
Figure 2 is a representation of a front view of the mobile computing device of the system of Figure 1.
Figure 3 is a block diagram of the device shown in Figure 1.
Figure 4 is a representation of a variation of the mobile computing device of Figure 1.
Figure 5 is a block diagram showing a non-limiting example of the host application in Figure 3.
Figure 6 is a flow-chart depicting a method of installing a proxy application.
Figure 7 shows an example of system 50 after installation of the proxy application according to the method of Figure 6, using a variation of the block diagram in Figure 5.
Figure 8 shows a method of accessing an application across a plurality of computers.
Figure 9 shows the computing machine and device of Figure 1 in isolation and in greater detail to illustrate an example of performance of certain blocks from the method of Figure 8.
Figure 10 shows the computing machine and device of Figure 9 to illustrate another example of performance of certain blocks from the method of Figure 8.
Figure 11 shows the computing machine and device of Figure 9 to illustrate another example of performance of certain blocks from the method of Figure 8.
Figure 12 is a schematic representation of another system for accessing an application across a plurality of computers.
Figure 13 is a block diagram of the device shown in Figure 12.
Figure 14 is a block diagram showing a non-limiting example of the host application in Figure 13.
Figure 15 shows an example of system 50 after installation of the proxy application according to the method of Figure 6, using a variation of the block diagram in Figure 5.
Figure 16 shows a method of upgrading an application using a plurality of computers.
Figure 17 shows the computing machine and device of Figure 12 in isolation and in greater detail to illustrate an example of performance of certain blocks from the method of Figure 16.
Figure 18 shows the computing machine and device of Figure 12 in isolation and in greater detail to illustrate an example of performance of certain additional blocks from the method of Figure 16.

### DETAILED DESCRIPTION

An aspect of this specification provides a method for controlling a transmission of an application using a plurality of computers including: establishing a direct connection between a computing machine and a mobile computing device, the mobile computing device connectable to a server storing a client application and configured to execute a host application; receiving a request at the host application to load a web page at a browser executing on the computing machine; the web page indicating an availability of a client application for transmission from the server to the mobile computing device; generating the web page at the browser; receiving at the host application an instruction from the computing machine to initiate a transmission of the client application from the server; receiving the client application at the mobile computing device.

The mobile computing device can be furt her configured to execute a manager application, and the client application stored by the server can be accessible by the manager application.

The method can further include installing the client application in the mobile computing device using the manager application.

The method can further include upgrading the client application in the mobile computing device using the manager application.

The client application can include one of an email application, a contact manager application, a calendar application, a memopad application, a tasks application, an instant messaging application, or a social networking application.

The transmitting of the client application can occur over a link between the computing machine and the server via a network and then through the direct connection.

The transmitting of the client application can occur over a link between the mobile computing device and the server that bypasses the computing machine.

The direct connection can include a proxy executing on the computing machine configured to associate an address entered into the browser with the host application.

An encrypted connection can be provided between the mobile computing device and the server.

The host application can be configured to access the client application via an application plug-in for intermediating communications between the host application and the client application.

The mobile computing device can be configured to execute a plurality of client applications corresponding to a plurality of networking applications.

The host application can be configured to access each of the client applications via a respective application plug-in for intermediating communications therebetween.

The host application can be further configured to host at least one client application via the browser on the computing machine, and the transmission of the client application can comprise transmitting another client application that is different from the at least one client application. The at least one client application can be subject to digital rights management and the digital rights management is effected by the manager application.

The present specification also provides a mobile computing device according to any of the foregoing.

The present specification also provides a computer readable medium including a plurality of programming instructions executable on a mobile computing device including a method for accessing an application across a plurality of computers according to any of the foregoing.

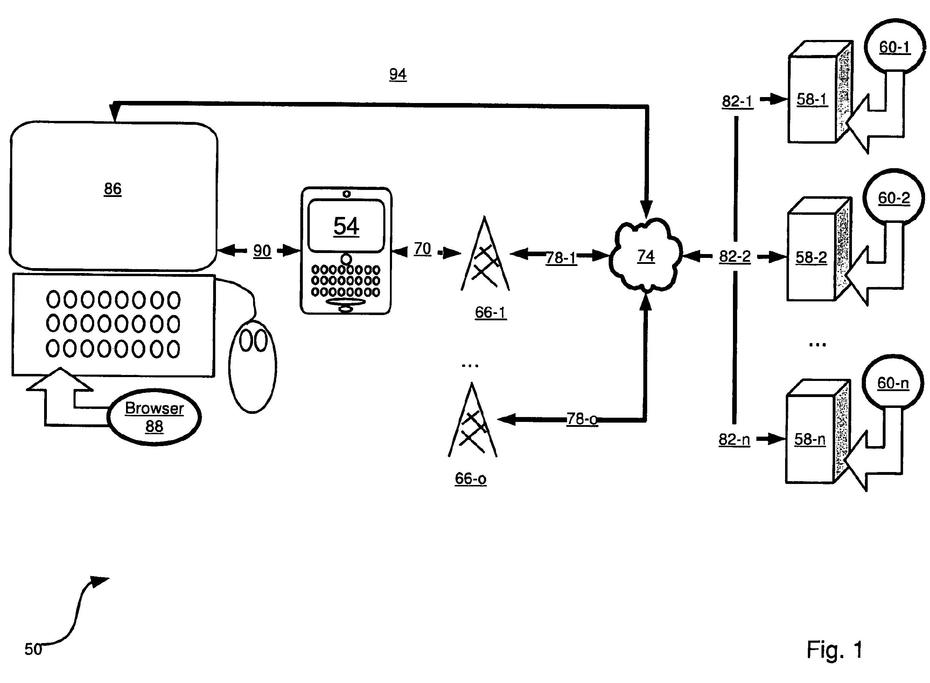

Referring now to Figure 1, a system for accessing an application across a plurality of computers is indicated generally at 50. In an example embodiment system 50 includes at least one computing device in the form of a mobile computing device 54 and at least one server 58-1, 58-2 ... 58-n (collectively referred to herein as servers 58).

A wireless link 70 connects mobile computing device 54 with one of a plurality of wireless base stations 66-1...66-o (collectively referred to herein as base stations 66). In Figure 1, mobile computing device 54 is shown as connecting to a first base station 66-1 via wireless link 70, but mobile computing device 54 can also connect to other base stations 66-2...66-o in system 50. Backhaul links 78-1...78-o (collectively referred to herein as backhaul links 78) connect each of the base stations 66 to a network 74. Additional backhaul links 82-1...82-n (collectively referred to herein as backhaul links 82) connect network 74 to each of the servers 58.

Mobile computing device 54 can be any type of electronic device that can be used in a self-contained manner and to interact with content available on network 74. Interaction includes displaying of information on mobile computing device 54 as well as receiving input at mobile computing device 54 that can in turn be sent back over network 74. Mobile computing device 54 will be explained in greater detail below.

It should now be understood that the nature of network 74 and links 70, 78 and 82 associated therewith is not particularly limited and are, in general, based on any combination of architectures that will support interactions between mobile computing device 54 and servers 58. In an example embodiment network 74 includes the Internet as well as appropriate gateways and backhauls to links 78 and 82. For example, backhaul links 78 and backhaul links 82 can be based on T1, T3, 03 or any other suitable wired or wireless connections. Accordingly, the links 78 and 82 between network 74 and the interconnected components are complementary to functional requirements of those components.

Link 70 may be based on, by way of non-limiting examples, a core mobile network infrastructure, such as, by way of non-limiting examples, one or more of Global System for Mobile communications ("GSM"); Code Division Multiple Access ("CDMA"; CDMA 2000) 3G; or Evolution-Data Optimized or Evolution-Data ("EVDO"); or successors thereto or hybrids or combinations thereof; or on wireless local area network ("WLAN") infrastructures such as, by way of non-limiting examples, the Institute for Electrical and Electronic Engineers ("IEEE") 802.11 Standard (and its variants) or Bluetooth or the like or hybrids or combinations th ereof. Note that in an example variation of system 50 it is contemplated that link 70 may be a wired connection.

A computing machine 86 also connects to mobile computing device 54 via a link 90. In an example implementation, computing machine 86 is a desktop, notebook, tablet, or laptop computer and link 90 is a direct connection effected wirelessly or wired. Where link 90 is wireless, then link 90 can be, for example, a Bluetooth™ or a peer-to-peer Wi-Fi connection between computing machine 86 and mobile computing device 54. Where link 90 is wired, then link 90 can be, for example, a universal serial bus ("USB") or Firewire connection. Those skilled in the art will now recognize other types of wired or wireless connections that can be used to effect a direct connection for link 90. In variations, link 90 can be effected indirectly through, for example, a local area network or a Wi-Fi network, or even through a wide area network such as network 74.

Computing machine 86 is initially configured to maintain or execute at least a web browser application 88, and need not have direct access to network 74, though in some cases such a direct connection to network 74 would be possible through a link 94. Accordingly, computing machine 86 can be based on any computing environment that provides web browsing functionality. For example, such a computing environment can be based on an Intel™ or AMD™ or other microprocessor, with accompanying volatile storage (e.g. random access memory) and non-volatile storage (e.g. Flash, Hard disc drive), read only memory (ROM), network interface card(s), video cards that connect to one or more displays, a keyboard, a mouse (or other pointing device). Any operating system may be used, including, for example, an operating system offered by Microsoft™, or a Linux™ operating system, or an operating system offered by Apple Computer. Browser application 86 can be any browser application that is executable on a respective operating system, including Firefox™, Internet Explorer™, Chrome™, Opera™ or Safari™. Typically, though not necessarily, computing machine 86 will have a display or a keyboard or both that are larger than that provided on mobile computing device 54. Computing machine 86 may also have another configuration, such as a tablet computing device.

Servers 58 can be based on any well-known server environment including a module that houses one or more central processing units, volatile memory (e.g. random access memory), persistent memory (e.g. hard disk devices) and network interfaces to allow servers 58 to communicate over network 74. For example, each of the servers 58 can be a ProLiant® Server from Hewlett-Packard Company, 3000 Hanover Street Palo Alto, CA 94304-1185 USA having a plurality of central processing units and having several gigabytes of random access memory. However, it is to be emphasized that this particular server is merely a non-limiting example, and a vast array of other types of computing environments for each of the servers 58 is contemplated. Furthermore, it is contemplated that each of the servers 58 may be implemented as a plurality of interconnected servers, in a so-called server farm, which are mirrored or otherwise configured for load balancing or failover or high availability or any or all of those.

As will be discussed further below, in an example embodiment, each of the servers 58 maintains a different one of the networking applications 60-1...60-n (collectively referred to herein as networking applications 60). Networking applications 60 can be any application whereby a corresponding client application executes on mobile computing device 54 which accesses data or any other server functions on a given one of the servers 58. Networking applications can be, by way of non-limiting examples, personal information management applications, social networking applications, or messaging applications. Non-limiting examples of personal information management applications include calendaring and contact management applications. Non-limiting examples of social networking application 60 include Facebook™, Twitter™, LinkedIn™, and MySpace™. Networking applications 60 can also include message applications such as email, BlackBerry® Messenger, AOL instant messenger (AIM), Yahoo Messenger (YM), Google Talk (Gtalk), Lotus Connections, Windows Live Messenger. There are many others.

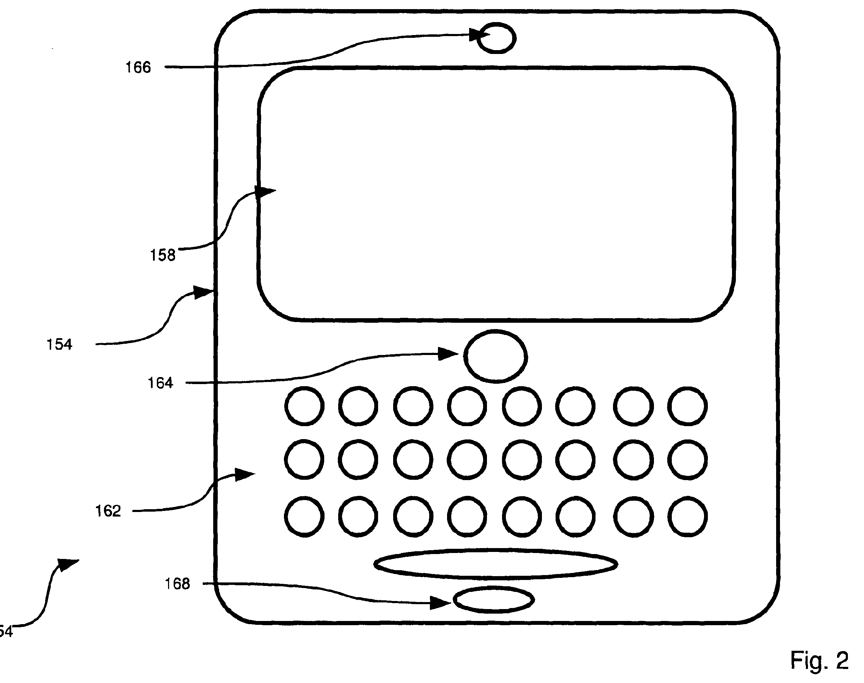

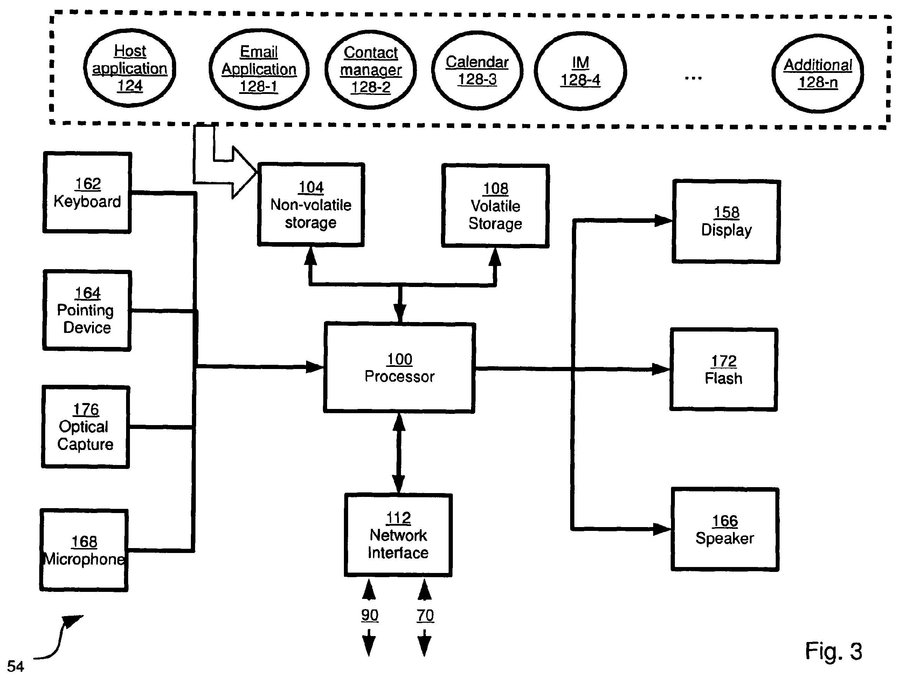

Figure 2 and Figure 3 show different views and representations of a non-limiting example of a mobile computing device 54 which can execute one or more applications as discussed in greater detail below. It is to be understood that mobile computing device 54 is an example, and it will be apparent to those skilled in the art that a variety of different portable electronic device structures are contemplated. Indeed variations on mobile computing device 54 can include, without limitation, a cellular telephone, a portable email paging device, a network enabled digital camera, a portable music player, a portable video player, a portable video game player, or tablet.

Referring to Figure 2, in a present, non-limiting example, device 54 includes a chassis 154 that supports a display 158. Display 158 can include one or more light emitters such as an array of light emitting diodes (LED), liquid crystals, plasma cells, or organic light emitting diodes (OLED). Other types of light emitters are contemplated. Chassis 154 also supports a keyboard 162. It is to be understood that this specification is not limited to any particular structure, spacing, pitch or shape of keyboard 162, and the depiction in Figure 2 is an example. For example, full or reduced "QWERTY" keyboards are contemplated. Other types of keyboards are contemplated. (In variations, device 54 may also be a touch-screen device with no physical keyboard.) Device 54 also includes a pointing device 164 which can be implemented as a touch-pad, joystick, trackball, track-wheel, or as a touch sensitive membrane on display 158. Device 54 may also include a speaker 166 for generating audio output, and a microphone 168 for receiving audio input.

Figure 3 shows a schematic block diagram of the electronic components of device 54. It should be emphasized that the structure in Figure 3 is an example. Device 54 includes a plurality of input devices which in an example embodiment includes keyboard 162, pointing device 164, and microphone 168 and an optical capture unit 176. Fewer, additional, or alternative input devices are contemplated. Input from keyboard 162, pointing device 164 and microphone 168 and optical capture unit 176 is received at a processor 100. Processor 100 can be configured to execute different programming instructions that can be responsive to the input received via input devices. To fulfill its programming functions, processor 100 is also configured to communicate with a non-volatile storage unit 104 (e.g. Erase Electronic Programmable Read Only Memory ("EEPROM"), Flash Memory) and a volatile storage unit 108 (e.g. random access memory ("RAM")). Programming instructions that implement the functional teachings of device 54 as described herein are typically maintained, persistently, in non-volatile storage unit 104 and used by processor 100 which makes appropriate utilization of volatile storage 108 during the execution of such programming instructions.

Processor 100 in turn is also configured to control display 158, speaker 166 and flash 172, also in accordance with different programming instructions and optionally responsive to different input receive from the input devices. Fewer, additional, or alternative output devices are contemplated.

Processor 100 also connects to a network interface 112, which can be implemented in an example embodiment as one or more radios configured to communicate over link 70 and link 90. Network interface 112 can thus be generalized as a further input/output device that can be utilized by processor 100 to fulfill various programming instructions. It will be understood that interface 112 is configured to correspond with the network architecture that defines each of link 70 and link 90. It is also contemplated that network interface 112 can include multiple radios to accommodate the different protocols that may be used to implement different types of links where the network architecture for each link 70 differs between base stations 66, or where link 90 may be based on different architectures. For example, link 90 may also be a wired link (e.g. USB) in which case it may not have a radio at all.

In an example embodiment, device 54 is also configured to maintain, within non-volatile storage 104, a host application 124, and one or more client applications 128-1...128-n (collectively referred to herein as client applications 128) such as an email application 128-1, a contact manager application 128-2, a calendar application 128-3, an instant messenger ("IM") application 128-4 or one or more of a plurality of additional client applications 128-n. Non-limiting examples of additional client applications 128-n can comprise, without limitation, a memopad application, or a tasks application or one or more of social networking client applications, e.g., Twitter, Facebook, MySpace, LinkedIn; other applications associated with online communities e.g., Flickr, Gtalk, etc; document tools such as Google Docs. Any one or more of host application 124 and client applications 128 can be pre-stored in non-volatile storage 104 upon manufacture of device 54, or transmitted via network interface 112 and saved on non-volatile storage 104 at any time subsequent to manufacture of device 54. Each of the client applications 128 is also configured to interact with its corresponding network application 60 as needed.

Processor 100 is configured to execute each of the client applications 128, making use of input from input devices and controlling display 158 to generate output based on that input and according to the programming instructions of each of the client applications 128. In general, each of the client applications 128 can be based on any existing or future client applications 128 that can be executed entirely on a device such as device 54, even when link 90 is not active and device 54 is disconnected from computing machine 86. For example, email application 54 can be a standard electronic mail application that is already commonly deployed on various devices such as device 54 and entirely usable on device 54, without any connection to computing machine 86, and while accessing servers 58 as needed. Likewise contact manager application 128-2, calendar application 128-3, instant messenger application 128-4 and any of the additional client applications 128-n can be based on such applications that are already commonly deployed, or may be deployed in the future, and entirely usable on device 54 without any connection to computing machine 86, and while accessing servers 58 as needed.

Processor 100 is also configured to execute host application 124 to permit access to client applications 128 via computing machine 86, when link 90 is active, as will be explained further below.

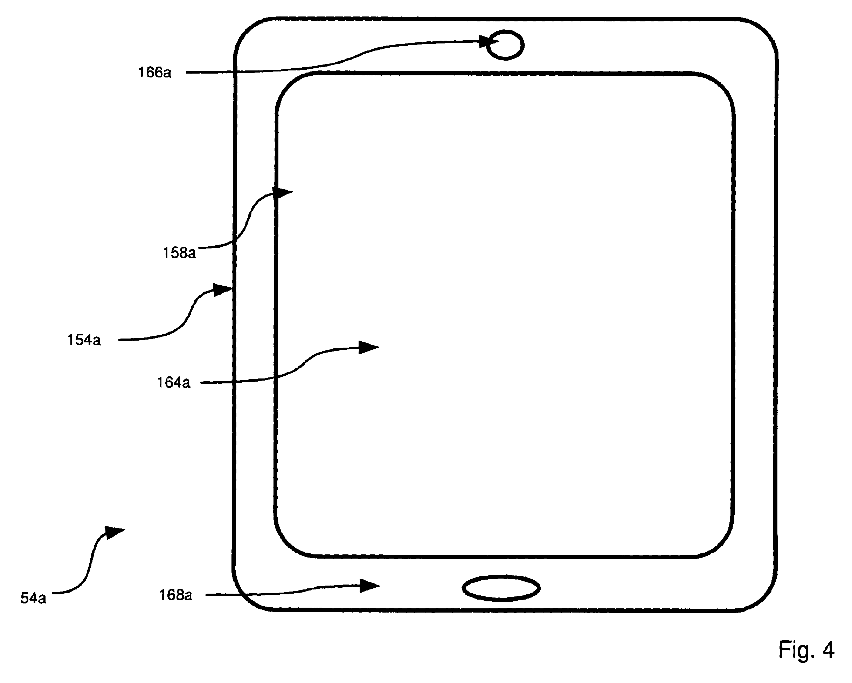

Referring briefly to Figure 4, a variation on device 54 is indicated generally as device 54a. Device 54a includes many of the same components as device 54, and therefore like components bear like references except followed by the suffix "a". Of note is that device 54a excludes keyboard 162 and pointing device 164. Instead, device 54a includes a touch screen 164a which provides the combined functionality of keyboard 162 and pointing device 164. Further variations on device 54 will now occur to those skilled in the art, but for convenience, further discussion of the present specification will focus on device 54 as described above. As will become apparent from further discussion herein, the lack of a full keyboard in device 54a presents certain limitations for providing input to device 54a, and those limitations may be mitigated by the present specification.

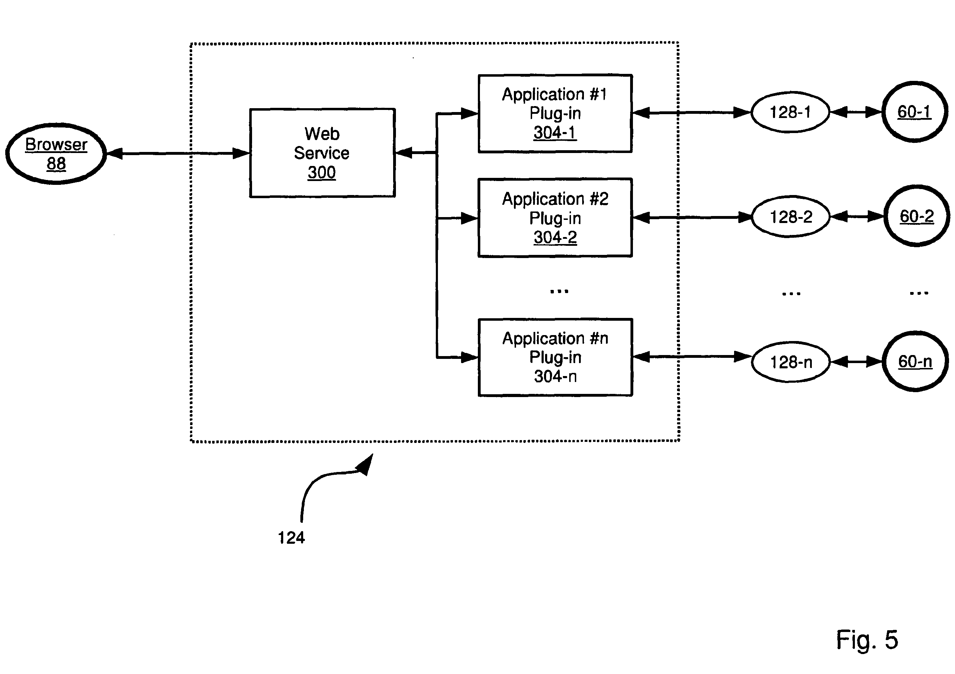

Figure 5 shows a block diagram of an example implementation of host application 124 and its virtual connections to browser 88 and client applications 128. The virtual connections between client applications 128 are also shown to networking applications 60. Those skilled in the art will now recognize that the components and connections in Figure 5 can be implemented using the hardware structures shown in Figure 1, or variations thereon. Host application 124 thus in an example embodiment includes a web service 300 and a plurality of application plug-ins 304-1...304-n (collectively referred to herein as application plug-ins 304). Web service 300 is configured to generate and serve content to browser 88, on behalf of each of the client applications 128 via a respective one of the application plug-ins 304. Application plug-ins 304 are configured to act as programming interfaces between web service 300 and client applications 128. Accordingly, each of the application plug-ins 304 is uniquely created for its corresponding one of the client applications 128, so that web service 300 can generate hyper-text markup language (HTML), as desired, and any other code (e.g. JavaScript files, Cascading Style Sheets) that are usable by browser 88, so that graphical interfaces can be generated on computing machine 86 for each of the client applications 128. According to this implementation, no modification to each of client applications 128 is needed in order to provide access to those client applications 128 via browser 88. Instead, access to a particular one of the client applications 128 can be provided on browser 88 by creating one of the application plug-ins 304 for that particular one of the client applications 128. Alternatively, one of the application plug-ins 304 may be implemented as a component of a particular one of the client applications 128.

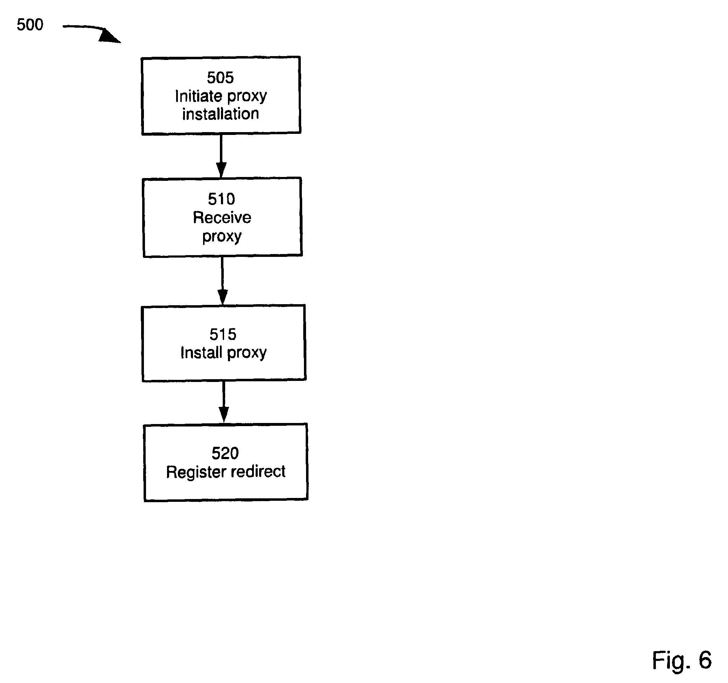

Referring now to Figure 6, a flow-chart depicting a method for provisioning a computing machine to interact with a mobile electronic device is indicated generally at 500. Method 500 can be implemented using system 50, and for purposes of explaining method 500 it will be assumed that method 500 is performed using system 50. However, it is to be understood that variations are contemplated to both method 500 and system 50 and such variations are within the scope of this specification. Method 500 is not strictly required, but in an example implementation method 500 provides a proxy on computing machine 86 such that web service 300 is addressable and reachable from the address bar in browser 88. Method 500 also assumes that link 90 is a direct link between computing machine 86 and mobile electronic device 54. Again, such a direct connection for link 90 can be a peer-to-peer Bluetooth™ connection whereby computing machine 86 and device 54 are "paired" using known BluetoothTM hardware and network protocols. Such a direct connection for link 90 can also be a USB cable connection. Other means for implementing link 90 will now occur to those skilled in the art. In an example implementation, it is assumed that link 90 is a Bluetooth™ connection.

Block 505 includes receiving an instruction to install a proxy application. Block 505 can be implemented in different ways. One factor that affects how block 505 is implemented is the location where the installation file for the proxy application is stored. In one implementation, the proxy application is stored on a server (possibly one or more of servers 58, though not necessarily) connected to network 74, in which case installation initiation may be effected by entering a uniform resource locator (URL) into browser 88 that points to the network 74 address of the server that stores the proxy application. In another implementation, the proxy application is stored as a data file within persistent storage 104 of device 54. In this implementation, non-volatile storage 104 of device 54 is configured to appear as an external hard-disk when link 90 is active - this type of configuration being inherent in many operating systems and devices such as device 54, where link 90 is a USB connection. Thus, once device 54 appears as a hard-disk, the data file containing the proxy application can be transmitted via link 90 to computing machine 86. In variations, the proxy could be provided on a CD or other removable media.

Block 510 includes receiving the proxy application for which installation was initiated at block 505. Where proxy application is stored on network 74, then block 510 includes transmitting the proxy application via network 74 and link 94. When proxy application is stored on device 54, then the proxy application is transferred via link 90 to computing machine 86.

Those skilled in the art will now recognize other means of effecting block 505 and block 510.

Block 515 includes installing the proxy application that was received at block 510. At this point it will be appreciated that the form in which proxy application is originally stored and received can vary according to the level of sophistication to be employed in the actual installation of the proxy application. It is presently contemplated that the proxy application will be an executable application that invokes an installation wizard, or the like, so that a simple series of key strokes on computing machine 86 are all that is required to actually install the proxy application. However, proxy application can be received at block 510 in other forms.

Block 520 includes registering the proxy application installed at block 515. Such registration is local to the computing machine 86 and serves to identify a URL or Internet Protocol (IP) address redirect such that entry of that URL or IP address causes browser 88 to access web service 300.

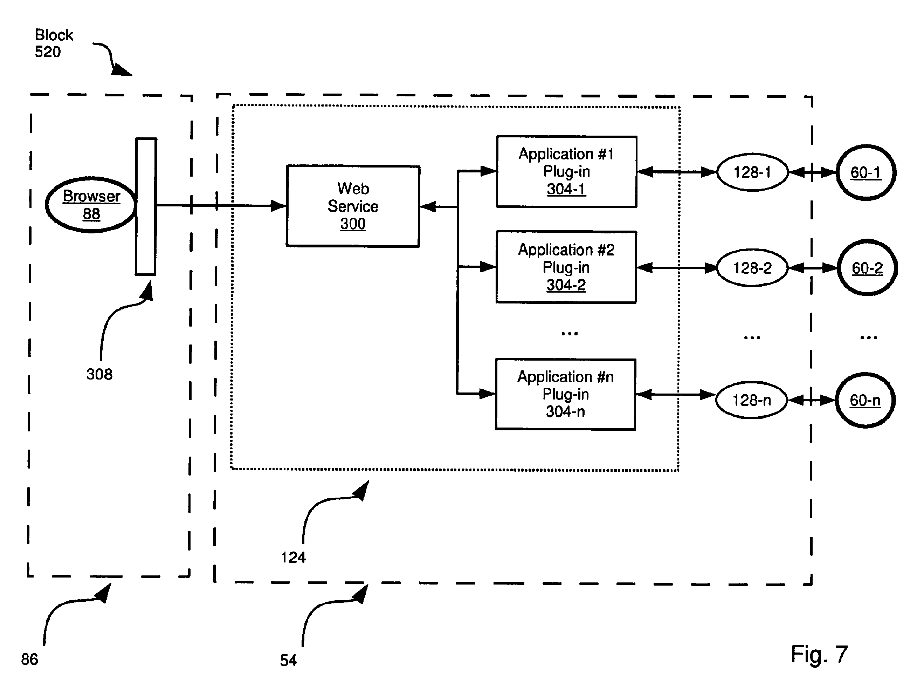

A representation of portions of system 50 is shown in Figure 7, which itself is a variation on Figure 5. Figure 7 is thus substantially the same as Figure 5, except that a proxy application 308 is shown as being installed on computing machine 86 and sitting between browser 88 and web service 300 on device 54. Expressed another way, proxy application 308 configures computing machine 86 so that entry of a given URL or other address in the address bar of browser 88 directs browser 88 to connect with web service 300 and to generate a web page on the display of computing machine 86 that corresponds to a web page being offered by web service 300. An example of such a URL may be, http://localhost, provided such a URL is not already reserved for another proxy application on computing machine 86. Thus, upon entry of http://localhost, browser 88 will be directed to proxy 308 and in turn browser 88 will connect to web service 300. Returning to the example where link 90 is based on Bluetooth™, then proxy application 308 sits between browser 88 and the Bluetooth service and drivers executing on computing machine 86, and forms a virtual connection with device 54 according to the Bluetooth pairing that has been registered on the Bluetooth service of device 54. In turn, web service 300 is configured to respond to HTTP requests received via the Bluetooth service that is resident on device 54.

At this point it is to be reiterated that method 500 and the use of proxy application 308 is not needed in all implementations contemplated by this specification, and accordingly, certain of the following discussions may not make reference to proxy application 308 and Figure 7. However, it is also to be understood that the following discussion is also applicable to configurations that utilize proxy application 308.

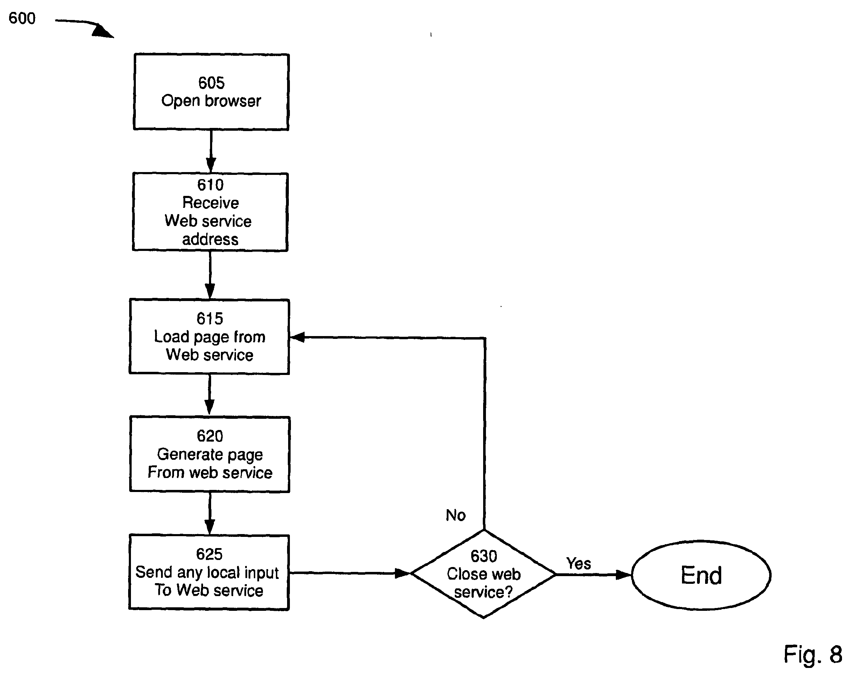

Referring now to Figure 8, a flow-chart depicting a method for accessing an application across a plurality of computers is indicated generally at 600. Method 600 can be implemented using system 50, and for purposes of explaining method 600 it will be assumed that method 600 is performed using system 50. However, it is to be understood that variations are contemplated to both method 600 and system 50 and such variations are within the scope of this specification. Performance of method 600 presumes that link 90 is active between device 54 and computing machine 86, such that a direct connection has been established between device 54 and computing machine 86.

Block 605 includes opening a web browser. In system 50, block 605 is effected at computing machine 86 whereby browser 88 is opened in the usual manner. Block 610 includes receiving a web service address. Block 610 is effected by typing an address (e.g. http://localhost) into the address bar of browser 88. In system 50, the address received at block 610 corresponds to the address of web service 300 of host application 124. In variations, it is contemplated that system 50 may be configured so that browser 88 is automatically launched and directed to the appropriate address in a single step: for example via a desktop shortcut on computing machine 86.

Block 615 includes loading a web page from the web service. In system 50, and during the initial performance of block 615, block 615 can include loading a webpage in the form of a menu that can be used to select invocation of any one of client applications 128.

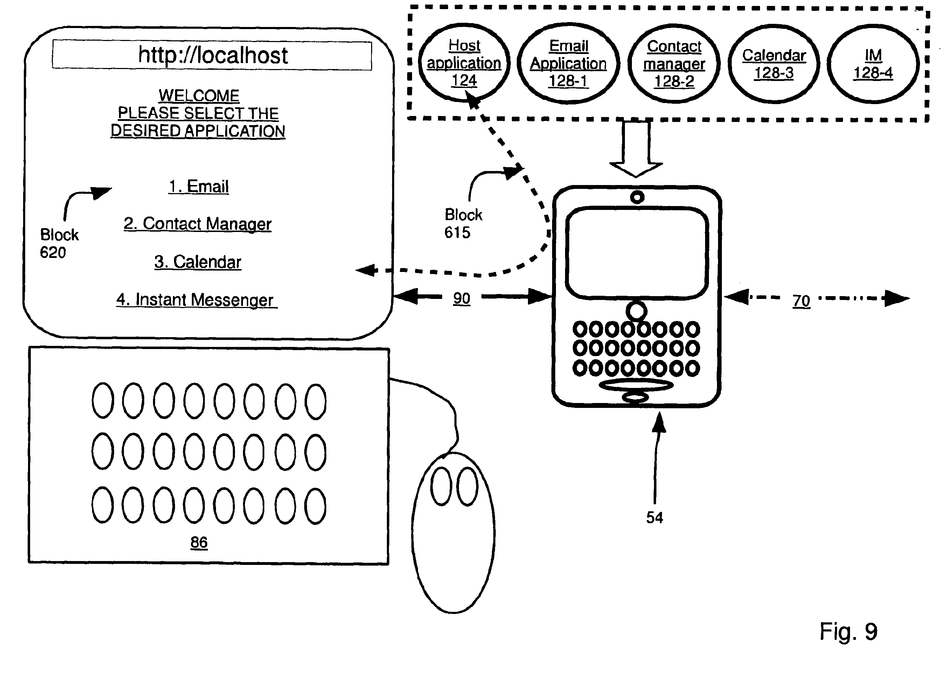

An example of this initial performance of block 615 is shown in Figure 9, where browser 88 is open on the display of computing machine 86, and a URL pointing to the web service 300 of host application 124 is open. Block 620 includes generating the web page that was loaded at block 615. As can be seen in Figure 9, host application 124 is serving a menu web page, which offers web-based access to the client applications 128 that are available on device 54. Thus, as shown on the display of computing machine 86 in Figure 9, menu item one reads "Email", which is offering access to email application 128-1; menu item two reads "Contact Manager", which is offering access to contact manager application 128-2; menu item three reads "Calendar", which is offering access to contact manager application 128-3; and menu item four reads "Instant Messenger", which is offering access to instant message application 128-4. For simplicity, application 128-n is not shown in Figure 9.

Block 625 includes sending any local input to the web service. Block 625 is effected through browser 88 which accepts local input from the keyboard or the mouse that is connected to computing machine 86. As part of that locally received input, any input that is responsive to forms or links or other input that can be entered into the page generated at block 620 is sent to the web service that originally served the page generated at block 620.

According to the example in Figure 9, input can be received that selects one of the four menu items being generated on the display of computing machine 86. To give a specific example, it can be assumed that menu item one is selected, indicating an instruction to access email application 128-1. Again, such selection can be effected via keyboard input, or by bringing a cursor into focus over the desired selection using a mouse, and then clicking the mouse to effect the selection.

Block 630 includes determining whether an instruction has been received to close the web service. Such an determination can be based on closing browser 88, or it can be based on entry of another URL in the address bar of browser 88, or it can based on any other instruction or event that instructs closing of the web service. A yes determination ends method 600.

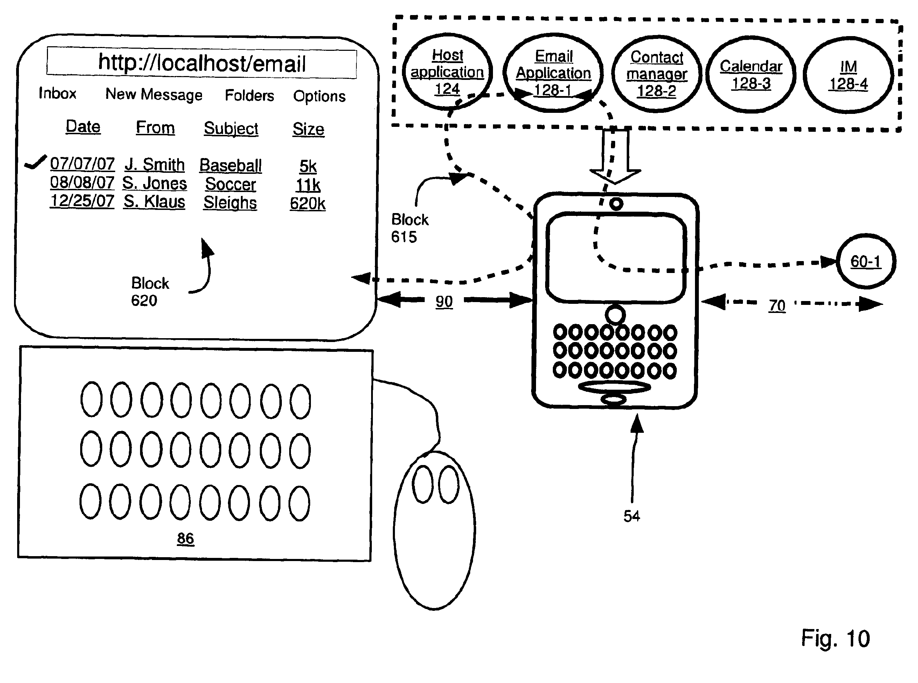

A no determination leads to a return to block 615 where any updates to the web page are loaded. Thereafter, method 600 continues performance as previously described. To give further explanation, and continuing with the example above where the menu selection for email was made, then during this performance of block 615 and block 620, a web page that provides web-access to email application 128-1 will be loaded and generated. This non-limiting example is shown in Figure 10, where browser application 86 is shown as accessing the address hftp://localhost/email, which is hosted by host application 124 in order to provide access to email application 128-1. When system 50 is configured using application plug-ins 304, then block 615 and block 620 may likewise make appropriate use of application plug-in 304-1 from Figure 5 in order to generate the display shown in Figure 10.

When the display shown in Figure 10 is active, then block 625 can include sending any input that is relevant to email application 128-1. For example, such input may include selecting "New Message", to thereby cause generation of a dialogue box on the display of computing machine 86 which can be used to compose a new email message. In this example, a subsequent cycle through block 615 and block 620 would result in generation of such a dialogue box for composition of a new email message. Note that such generation is effected by host application 124 creating a web page with such a dialogue box, based on host application 124 interacting with email application 128-1, again making use of application plug-in 304-1 from Figure 5 when such an application plug-in is employed.

In general, those skilled in the art will now appreciate that the data generated on the display of computing machine 86 is under the control of device 54 and that computing machine 86 is effectively a web-client while device 54 acts as a web-server. Furthermore, device 54 also makes use of link 70 to access the appropriate one of the servers 58 and one of the networking applications 60, as part of determining what data to display on the display of computing machine 86. Again, in the example of email, email application 128-1 accesses networking application 60-1 on server 58-1 in order to send new emails generated using computing machine 86 and by the same token, email application 128-1 accesses networking application 60-1 in order to receive new emails, which are in turn generated on the display of computing machine 86. Any other functions normally associated with email application 128-1 are likewise reflected on the display of computing machine 86 and appropriate access to server 58-1 is effected accordingly. In addition to static web pages, browser 88 may be configured to receive code (e.g. JavaScript code) from host application 124. While executing this code, browser 88 may, from time to time, (e.g. possibly in response to user input or some other condition), request additional resources from host application 124 in order to update the page currently on the display without loading an entirely new page.

In order to configure browser 88 to respond to changes that occur on device 54, or on one of the servers 58, an "open-get" or equivalent programming function is employed so that browser 88 will automatically receive and respond to such changes. For example, assume that a new email message arrives on server 58-1, and that same new email message automatically arrives on device 54. The "open-get" function running on browser 88 will result in browser 88 also ascertaining the arrival of the new email message and result in the display of computing machine 86 being updated accordingly to reflect the arrival of the new email message.

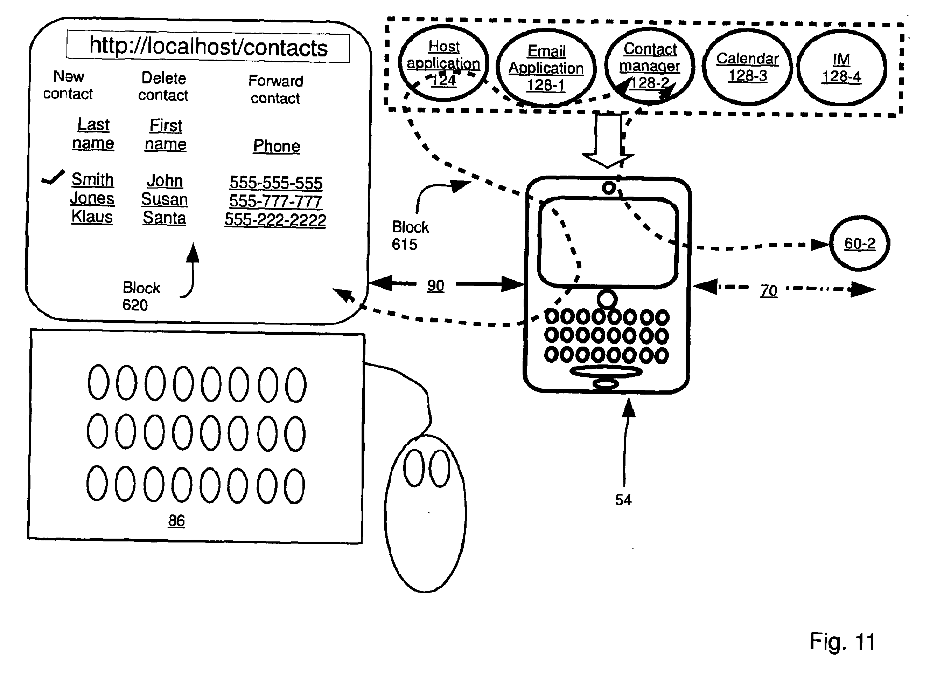

To help further illustrate the present specification, Figure 11 shows a non-limiting example of the result of selecting contact manager application 128-2. In Figure 11, the URL http://localhost/contacts is active and accordingly the web service 300 of host application 124 is accessing contact manager 128-2 so that input relative to contact manager application 128-2 can be received via computing machine 86, and likewise, the display of computing machine 86 can be controlled to display content relative to contact manager application 124-2. Again, changes to the contact database can be made computing machine 86, or they can be made on device 54. Such changes can then be propagated to server 60-2 in the usual manner.

Those skilled in the art will now recognize how the foregoing can extend to calendar application 128-3, instant messenger application 128-4 and other client applications 128-n.

Various advantages will now be apparent. For example, it is common that communications between device 54 and servers 58 may be effected via encrypted links. Accordingly, when link 90 is active, a full browsing experience, complete with full size display and full size keyboard, can be used to interact with various applications on device 54 but such interactions will be encrypted and secure. Furthermore, in certain situations link 94 may not be available, or of limited use, due to security restrictions, usage fees, or of low bandwidth and accordingly accessing data on servers 58 from computing machine 96 via link 94 may not be possible or may be impractical. Nonetheless, it may be desired to use computing machine 86 for such interactions, rather than device 54, due to the availability of the full keyboard, mouse and regular display that is available on computing machine 86. Accordingly, the present specification may be most useful when device 54 is near enough to a given computing machine 86 in order to establish link 90. Such computing machines 86 are ubiquitous in air port lounges, hotel rooms, Internet cafes and other locations. Accordingly, for at least these reasons, this specification can be used to provide access to various applications from such computing machines 86 in a novel, inventive and useful manner. It should also be noted that computing machine 86 may have different configurations, and could include, for example, a tablet computer.

Variations, subsets, enhancements and combinations of the foregoing are contemplated. For example, none of the screen shots shown in Figure 9, Figure 10 or Figure 11 should be construed as being limiting as to exactly how data is generated on the display of computing machine 86.

Furthermore, in relation to proxy application 308 in Figure 7, it may be unlikely that publicly available computing machines 86 will have proxy application 308 pre-installed, so as noted proxy application 308 may be stored in non-volatile storage 104 on client device 54. Further, it should be noted that non-volatile storage 104, itself, can be implemented as a removable storage media such as an SD card. Using a USB connection that proxy application 308 may be transmitted from the SD card to the computing machine 86. Device 54 may also be configured so that it includes an auto-executable file which immediately executes on computing machine 86 upon connection to computing machine 86, and automatically copies proxy application 308 to the computing machine 86. (Alternatively, device 54 can be configured so this installation is performed manually). After proxy application 308 has started, link 90 may be implemented via the USB connection or Bluetooth pairing or by other means. In the case of Bluetooth, the pairing step with computing machine 86 could happen in a number of ways. For example, a scan for Bluetooth devices may be initiated from either device 54 or computing machine 86 or both in the usual way. Alternatively, as part of proxy application 308, the computing machine 86 may be configured to display a barcode that can be scanned using optical capture unit 176. The barcode data may include configuration information usable by device 54 to establish pairing with computing machine 86.

When a "yes" decision is reached at block 630, computing machine 86 may be configured to clear its browser cache to ensure that private data has been cleared from the computing machine's 86 memory. The "yes" determination at block 630 may be reached in a number of ways: device 54 may be manually logged off from computing machine 86; link 90 may be terminated by unplugging a USB cable used to establish link 90; link 90 may be terminated by ending the Bluetooth connection between device 54 and computing machine 86. An inactivity timer may be used to reach the "yes" determination at block 630.

Alternatively, computing machine 86 may operate in a no-cache mode when connected to device 54. In this mode, performance may be somewhat degraded since browser 88 may cause the transmission of content more often.

As noted above, device 54 runs a host application 124 that may be configured to listen to a real time communication channel, such as an instant messaging conversation via instant message application 128-4. JavaScript may be executing on browser 88, such JavaScript having been provided by host application 124. This JavaScript maintains an open connection with the host application 124. When an event occurs in application 128-4, it is returned to the JavaScript so that corresponding changes occur on the display of computing machine 86 under the control of browser 88. If an instant message reply is sent from the browser 88, then a separate parallel connection is opened and the commands are sent to host application 124 which then injects them into the ongoing conversation within instant message application 128-4.

In general, it can be noted that there are many client applications 128 (with corresponding data sources and networking applications 60) on devices like device 54, including without limitation email, contacts, calendar, etc. Using this specification, each application 60 and its data may be rendered using browser 88 in a customized manner. Also, newly-installed and newly-created client applications 128 may be readily added as available through browser 88 by creating a new application plug-in 304 for each of the new client applications 128. Host application 124 is configured to allow for ongoing registrations of new application plug-ins 304. In effect, device 54 provides an application programming interface (API) associated with host application 124 that allows any one of the client applications 128 running on the device 54 to register as a data source. Each of the client applications 128 can be assigned its own URL prefix and a handler class that implements a particular interface. All hypertext transfer protocol (HTTP) requests from computing machine 86 for URLs with that prefix may be given to the handler class to be processed. The HTTP handler may respond to each request in any way that it sees fit, so it is in control of the data rendering. Because registration of client applications 128 with host application 124 may be dynamic, a compiled version of host application 124 need not be limited to only those client applications 128 installed at the same time as host application 124 is installed. Newly-installed client applications 128 can register at which point they will dynamically appear as being available through browser 88. Host application 124 can also dynamically enumerate all of the registered client applications 128 at the time of creating a menu screen such as the menu screen shown in Figure 9.

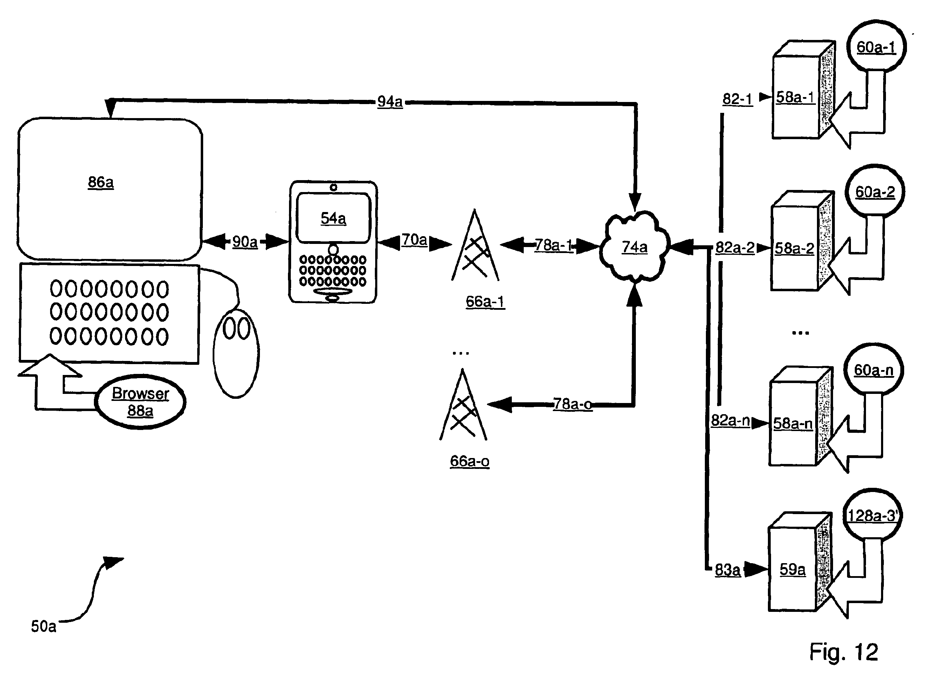

Referring now to Figure 12, another system for accessing an application across a plurality of computers is indicated generally at 50a. System 50a includes substantially the same components as system 50, and accordingly, like elements bear like references, except followed by the suffix "a". As will become apparent from further understanding of this specification, some of the like components with system 50 may be omitted while still providing the features of system 50a.

System 50a additionally includes at least one upgrade server 59a, which is configured to store at least one client application upgrade. In the specific example of system 50a, upgrade server 59a stores a calendar application upgrade 128a-3', which is an upgrade of calendar application 128a-3. Upgrade server 59a can be based on substantially the same computing environment, or a variation thereon, as the computing environments of servers 58a-1...58a-n (collectively referred to herein as servers 58a). By the same token, calendar application upgrade 128a-3' can be stored on one of the servers 58a-1...58a-n rather than on its own server 59a.

System 50a additionally includes a backhaul link 83a that connects server 59a to network 74a. Backhaul link 83a functions substantially the same as backhaul links 82a-1...82a-n and can therefore be based on structures that provides such functionality, as previously discussed.

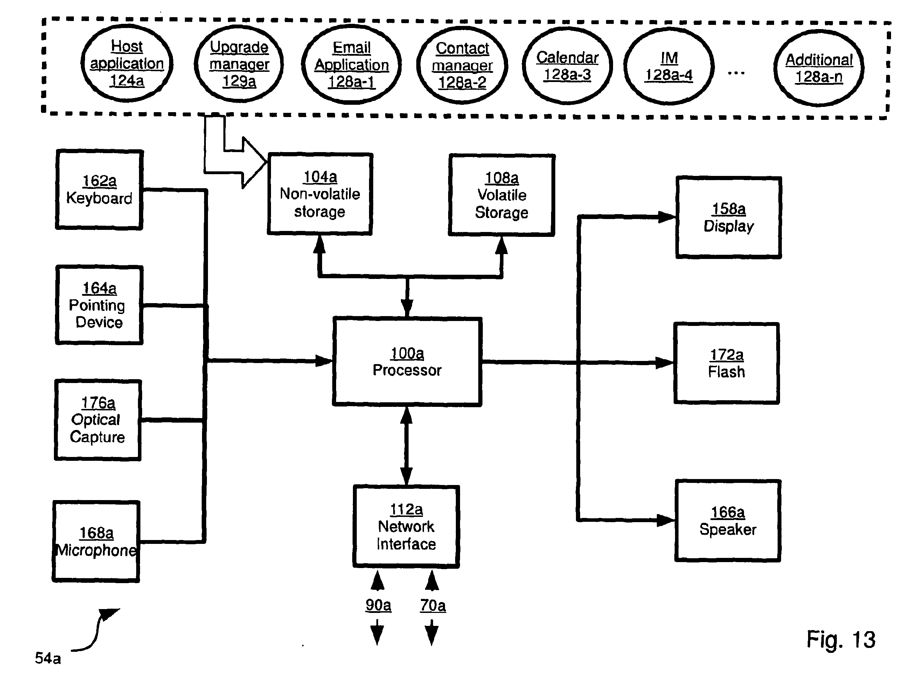

Figure 13 shows a schematic block diagram of the electronic components of device 54a. Again, it should be emphasized that the structure in Figure 13 is an example. Device 54a includes substantially the same components as device 54, and accordingly, like elements bear like references, except followed by the suffix "a".

Device 54a additionally includes, within non-volatile storage 104a, an upgrade manager application 129a (also referred to herein as a "manager application"). As will be discussed further below, upgrade manager application 129a is configured to communicate with upgrade server 59a to ascertain when upgrades for client applications 128a are available, and to administer the replacement for a given one of client applications 128a with an upgrade therefor using an upgrade client application 128a'. (Note that in an example embodiment, an upgrade manager application 129a is contemplated, but in variations, device 54a can be configured to execute a manager application that is configured for managing transmissions of client applications, but not necessarily installation or upgrades of client applications.)

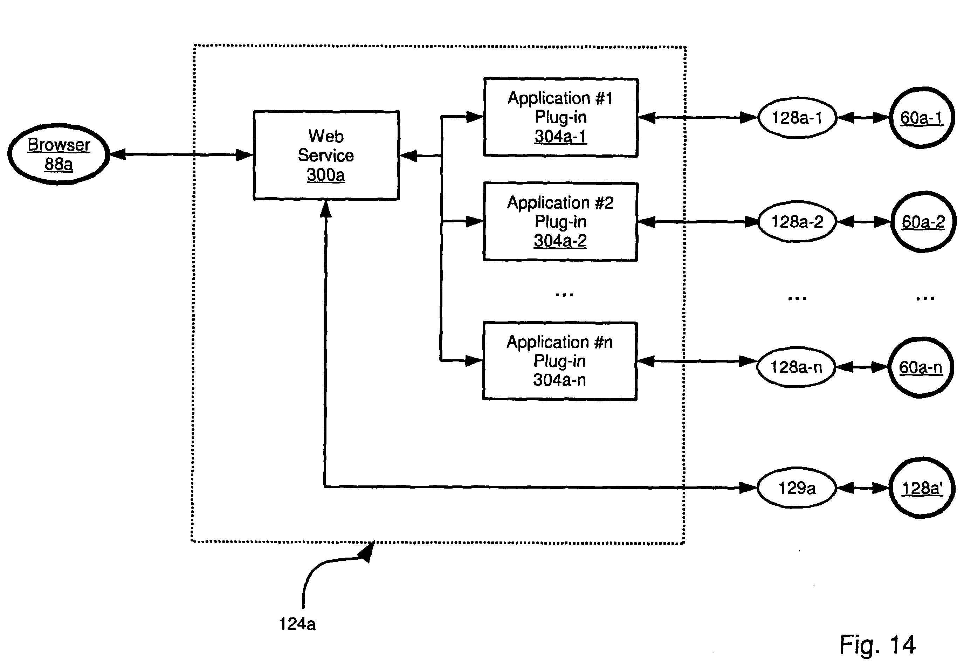

Figure 14 shows a block diagram of an example implementation of host application 124a and its virtual connections to browser 88a and client applications 128a-1...128a-n (collectively referred to herein as client applications 128a). The virtual connections between client applications 128a are also shown to networking applications 60a-1...60a-n. Those skilled in the art will now recognize that the components and connections in Figure 14 can be implemented using the hardware structures shown in Figure 12, or variations thereon. Those skilled in the art will also now recognize that Figure 14 is a variation on Figure 5.

Figure 14 also shows the virtual connections between web service 300a and upgrade manager application 129a. The virtual connection between upgrade manager application 129a and upgrade client application 128a' is also shown. It will be understood that the latter virtual connection will exist when upgrade client application 128a' becomes available and thus the detection of upgrade client application 128a' by upgrade manager application 129a is presumed to have already occurred according to Figure 14. (In a variation, upgrade manager application 129a is simply a manager application and upgrade client application 128a' is not necessarily reflective of an application that is being upgraded, but merely an application or other item of software that is being transmitted.)

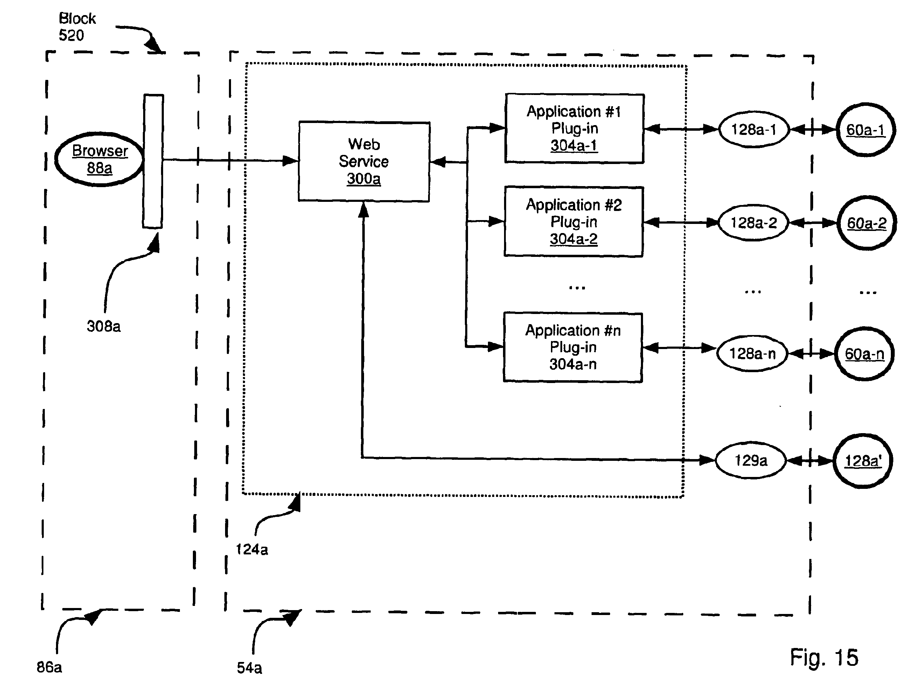

Referring briefly to Figure 15, at this point it can be noted that method 500 in Figure 6 can be used to install proxy application 308a, where system 50a is configured to use proxy application 308a, though it is to be reiterated that method 500 and the use of proxy application 308a is not needed in all implementations contemplated by this specification, and accordingly, certain of the following discussions may not make reference to proxy application 308a and Figure 7. However, it is also to be understood that the following discussion is also applicable to configurations that utilize proxy application 308a.

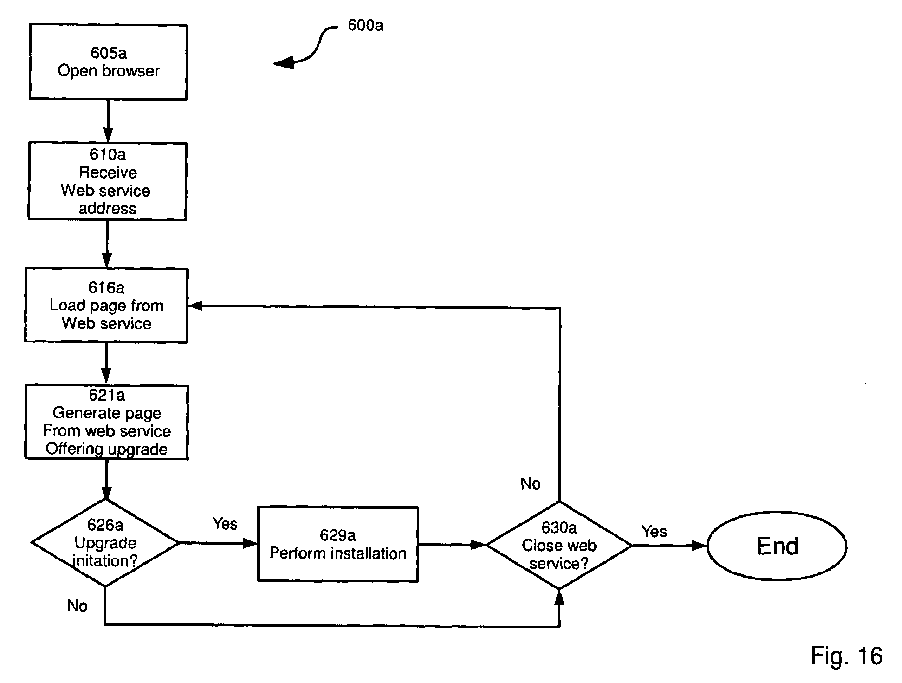

Referring now to Figure 16, a flow-chart depicting a method for upgrading an application using a plurality of computers is indicated generally at 600a. Method 600a can be implemented using system 50a, and for purposes of explaining method 600a it will be assumed that method 600a is performed using system 50a. Also of note is that method 600 can be performed on system 50a. However, it is to be understood that variations are contemplated to both method 600a and system 50a and such variations are within the scope of this specification. For example, system 50a can be modified so that the functionality of method 600 is *not* provided in system 50a, and only the upgrade functionality of method 600a is offered.

In any event, performance of method 600a presumes that link 90a is active between device 54a and computing machine 86a.

Block 605a, block 610a, and block 630a are substantially the same as block 605, block 610 and block 630, respectively, and accordingly will not be discussed further.

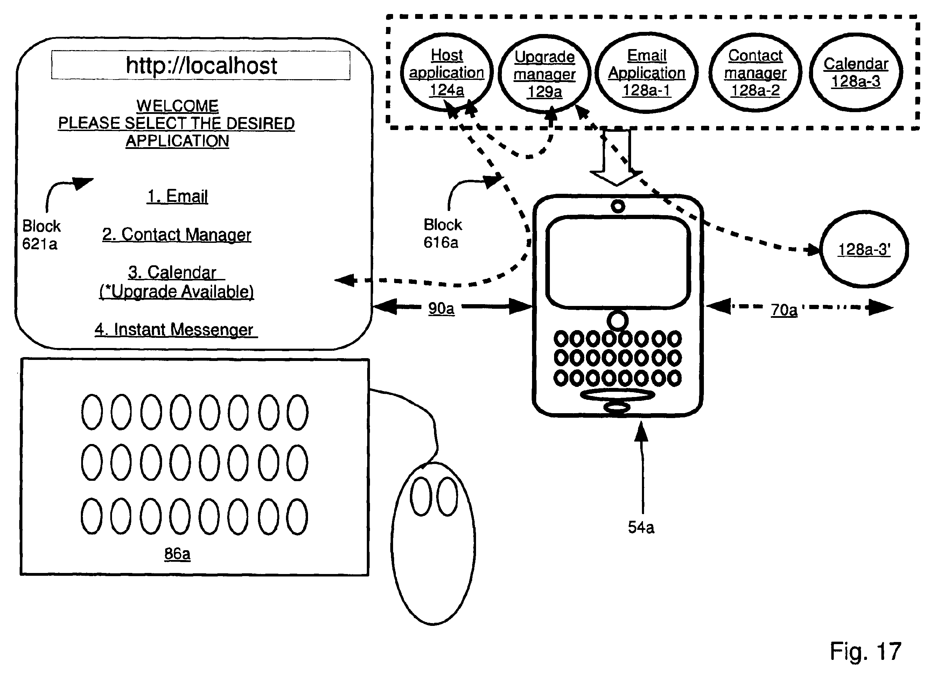

Block 616a can be viewed as a variation on block 615, and like block 615, includes loading a web page from the web service. The loading of the web page can be in response to a request at a host application to load the web page from the web service. The result of the request is the sending of the web page from the host application, thereby completing the loading process. Indeed, in system 50a, during the initial performance of block 616a, block 616a can include loading a webpage in the form of the menu discussed in relation to block 615 that can be used to select invocation of any one of client applications 128a. An example of performance of this initial performance of block 616a is shown in Figure 17, where browser 88a is open on the display of computing machine 86a, and a URL pointing to the web service 300a of host application 124a is open. Block 621a includes generating the web page that was loaded at block 616a. As can be seen in Figure 17, host application 124a is serving a menu web page, which offers web-based access to the client applications 128a that are available on device 54a. Thus, as shown on the display of computing machine 86a in Figure 17, menu item one reads "Email", which is offering access to email application 128a-1; menu item two reads "Contact Manager", which is offering access to contact manager application 128a-2; menu item three reads "Calendar", which is offering access to contact manager application 128a-3. For simplicity, client applications 128a-4 and 128a-n are not shown in Figure 17.

Additionally, as part of block 616a, Figure 17 shows communication interactions between: a) upgrade application 128a-3' (resident on server 59a, not shown) and upgrade manager application 129a; and b) upgrade manager 129a and host application 124a. Such communication interactions configure host application 124a to generate a web page that reflects the fact that upgrade calendar application 128a-3' is available for transmission and installation to device 54a as a replacement for calendar application 128-3.

Additionally, as part of block 621a, Figure 17 shows the generation of the notation "(*Upgrade Available)" in association with menu item three reading "Calendar", communicating the fact that upgrade calendar application 128a-3' is available for transmission. Note that other webpages can be generated offering the upgrade, and there is no requirement that such generation be offered solely from a menu page.

Block 626a includes determining if a request to initiate an upgrade has been received. A "no" determination results in advancement to block 630a. A "yes" determination at block 626a leads to block 629a. The means by which a "yes" determination is reached at block 626a is not particularly limited, and can be based on any mouse clicks or keystrokes at computing machine 86a that signals an instruction to install the upgrade that was made available at block 621a. (Note that in variations, the request can be a request to simply transmit the application, without the request including an instruction to actually install the application.)

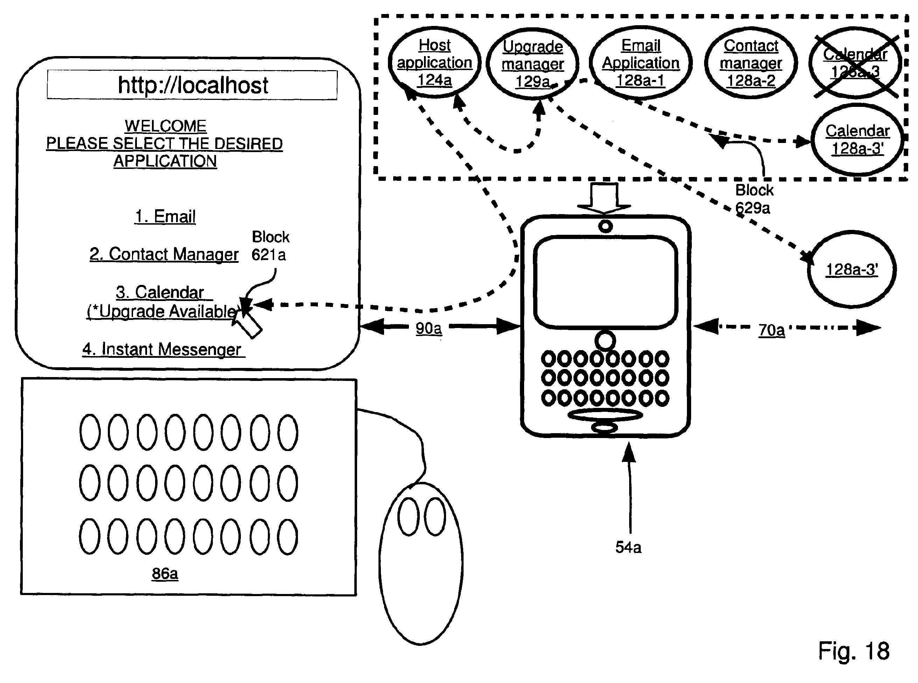

Block 629a includes performing the installation t hat was requested at block 626a. (Again, in variations of block 629a, instead of an installation, a transmission without installation can be performed). The means by which block 629a is implemented are also not particularly limited. One example way to implement block 629a is shown in Figure 18, which includes upgrade manager 129a coordinating a transmission of application upgrade 128a-3' from server 59a via link 70a, (so that application upgrade 128a-3' is received at device 54a), and removing calendar application 128a-3 from device 54a and replacing calendar application 128a-3 with calendar application 128-3a'. In the above example, computing machine 86 is thus bypassed in the provision of application upgrade 128a-3' to device 54. Another example way to implement block 629a, not shown, includes upgrade manager 129a coordinating a transmission of application upgrade 128a-3' from server 59a via link 94a and network 74a and then removing calendar application 128-3a from device 54a and replacing it with calendar application 128-3a'. The choice of which link to use may be based on the bandwidth, speed, privacy or financial cost associated with the selection link 70a or link 94a. The choice of whether to use link 70a or link 94a as the transmission path for application upgrade 128a-3' can be automatic, or manually selected.

Various advantages will now be apparent. For example, computing machine 86a typically has a larger display than device 54a, and therefore the upgrade notification from block 621 a can be generated for each web page that is generated on the display, to therefore provide persistent, but non-obtrusive reminders that the upgrade is available. The persistence of such reminders may be beneficial when the upgrade itself involves a reboot of device 54a, and thus the actual upgrade may be continually deferred despite the reminder.

As a still further advantage, the upgrade is managed by device 54a, and accordingly, no additional proprietary software is required for computing machine 86a to facilitate or manage or even detect the availability of the upgrade. As a related advantage, device 54a can be connected to different computing machines 86a without the need for local proprietary software on those computing machines 86a. A still further related advantage is that digital rights management related to the permissions for a device 54a to be entitled to an upgrade is entirely locally managed by device 54a. However, certain proprietary desktop applications that can be used to manage content on a device cannot be readily ported to (or run on) different computing machines as the digital rights management requirements become more complex when using that desktop application to manage applications (or other software) on the device. A still further advantage is that upgrade manager 129a can (via host application 124a as generated on machine 86) be used to manage other applications that may be executing on device 54, but which are not otherwise available on machine 86a via host application 124a. For example, a background application (e.g. an application other than email application 128a-1, contact manager application 128a-2, calendar application 128a-3) that is not accessible via host application 124a could still have upgrades managed via upgrade manager application 129a, including notifications of availability of such upgrades being generated on machine 86a via host application 124a, in addition to the commencement and monitoring of progress of those upgrades.

While the above embodiments are discussed in relation to application upgrades, it should also be understood that this specification can also be applied to upgrades of other types of device software files, including operating system software or media. Accordingly, the term "application" should not be construed in a strictly limiting sense.

Other variations, combinations, and subsets will now occur to those skilled in the art.

## Claims

1. A method for controlling of transmission of an application using a plurality of computers comprising:
establishing a direct connection (90) between a computing machine (86) and a mobile computing device (54), the mobile computing device (54) connectable to a server (59a) storing a client application (60) and the mobile computing device (54) configured to execute a host application (124);
receiving a request at the host application (124) to load a web page from a web service (300) of the host application (124) and providing said web page at a browser (88) executing on the computing machine (86); the web page indicating an availability of a client application (128) for transmission from the server (59a) to the mobile computing device (54);
transmitting the web page for generation at the browser (88);
receiving at the host application (124) an instruction from the computing machine (86) to initiate a transmission of the client application (128) from the server (59a); and
receiving the client application (128) at the mobile computing device (54).

2. The method of claim 1, wherein the mobile computing device is further configured to execute a manager application (129a), and wherein the client application (128) stored by the server (59a) is accessible by the manager application (129a).

3. The method of claim 2 further comprising installing the client application (128) in the mobile computing device (54) using the manager application (129a).

4. The method of claim 2 or claim 3 further comprising upgrading the client application (128) in the mobile computing device (54) using the manager application (129a).

5. The method of any one of claims 1 to 4 wherein the client application (128) comprises one of an email application, a contact manager application, a calendar application, a memopad application, a tasks application, an instant messaging application, or a social networking application.

6. The method of any one of claims 1 to 5 wherein the receiving of the client application (128) occurs over a link between the computing machine (86) and the server (59a) via a network and then through the direct connection (90).

7. The method of any one of claims 1 to 5 wherein the receiving of the client application (128) occurs over a link between the mobile computing device (54) and the server (59a) that bypasses the computing machine (86).

8. The method of any one of claims 1 to 6 wherein the direct connection (90) comprises a proxy (308) executing on the computing machine (86) configured to associate an address entered into the browser (88) with the host application (124).

9. A mobile computing device (54) for providing access to an application across a plurality of computers comprising:
at least one network interface (112) for establishing a direct connection (90) between a computing machine (86) and the mobile computing device (54), the at least one network interface connectable to at least one server (59a) storing a client application (60);
a processor (100) connected to the at least one network interface (112) and configured to:
execute a host application (124) and to receive a request at the host application (124) to load a web page from a web service (300) of the host application (124) and providing said web page at a browser (88) executing on the computing machine (86); the web page indicating an availability of a client application (128) for receipt at the mobile computing device (54) from the server (59a);
transmit the web page for generation at the browser (88);
receive at the host application (124) an instruction from the computing machine (86) to initiate a receiving of the client application (128) from the server (59a);
receive the client application (128) at the mobile computing device (54).

10. The mobile computing device of claim 9, wherein the processor (100) is further configured to execute a manager application (129a), and wherein the client application (128) stored by the server (59a) is accessible by the manager application (129a).

11. The mobile computing device of claim 10 wherein the processor (100) is further configured to install or upgrade the client application (128) in the mobile computing device (54) using the manager application (129a).

12. The mobile computing device of any one of claims 9 to 11 wherein the client application (128) comprises one of an email application, a contact manager application, a calendar application, a memopad application, a tasks application, an instant messaging application, or a social networking application.

13. The mobile computing device of any one of claims 9 to 12 wherein the receiving of the client application (128) occurs over a link between the computing machine (86) and the server (59a) via a network and then through the direct connection (90).

14. The mobile computing device of any one of claims 9 to 12 wherein the receiving of the client application (128) occurs over a link between the mobile computing device (54) and the server (59a) that bypasses the computing machine (86).

15. The mobile computing device of any one of claims 9 to 12 wherein the direct connection (90) comprises a proxy (308) executing on the computing machine (86) configured to associate an address entered into the browser (88) with the host application (124).

## Patentansprüche

1. Ein Verfahren zum Steuern einer Übertragung einer Anwendung unter Verwendung einer Vielzahl von Computern, das aufweist:
Herstellen einer direkten Verbindung (90) zwischen einer Computermaschine (86) und einer mobilen Computervorrichtung (54), wobei die mobile Computervorrichtung (54) mit einem Server (59a) verbindbar ist, der eine Client-Anwendung (60) speichert, und die mobile Computervorrichtung (54) konfiguriert ist zum Ausführen einer Host-Anwendung (124);
Empfangen einer Anforderung an der Host-Anwendung (124) zum Laden einer Webseite von einem Webdienst (300) der Host-Anwendung (124) und Vorsehen der Webseite an einem Browser (88), der auf der Computermaschine (86) ausgeführt wird; wobei die Webseite eine Verfügbarkeit einer Client-Anwendung (128) zur Übertragung von dem Server (59a) an die mobile Computervorrichtung (54) angibt;
Übertragen der Webseite zur Erzeugung an dem Browser (88);
Empfangen, an der Host-Anwendung (124), einer Anweisung von der Computermaschine (86) zum Initiieren einer Übertragung der Client-Anwendung (128) von dem Server (59a); und
Empfangen der Client-Anwendung (128) an der mobilen Computervorrichtung (54).

2. Das Verfahren gemäß Anspruch 1, wobei die mobile Computervorrichtung weiter konfiguriert ist zum Ausführen einer Verwaltungsanwendung (129a) und wobei auf die Client-Anwendung (128), die von dem Server (59a) gespeichert ist, durch die Verwaltungsanwendung (129a) zugegriffen werden kann.

3. Das Verfahren gemäß Anspruch 2, das weiter ein Installieren der Client-Anwendung (128) in der mobilen Computervorrichtung (54) unter Verwendung der Verwaltungsanwendung (129a) aufweist.

4. Das Verfahren gemäß Anspruch 2 oder Anspruch 3, das weiter ein Upgraden der Client-Anwendung (128) in der mobilen Computervorrichtung (54) unter Verwendung der Verwaltungsanwendung (129a) aufweist.

5. Das Verfahren gemäß einem der Ansprüche 1 bis 4, wobei die Client-Anwendung (128) eine aus einer Email-Anwendung, einer Kontaktverwaltungsanwendung, einer Kalenderanwendung, einer Memopad-Anwendung, einer Aufgabenanwendung, einer Instant-Messaging-Anwendung oder einer Soziales-Netzwerk-Anwendung aufweist.

6. Das Verfahren gemäß einem der Ansprüche 1 bis 5, wobei das Empfangen der Client-Anwendung (128) über eine Verbindung zwischen der Computermaschine (86) und dem Server (59a) über ein Netzwerk und dann über die direkte Verbindung (90) erfolgt.

7. Das Verfahren gemäß einem der Ansprüche 1 bis 5, wobei das Empfangen der Client-Anwendung (128) über eine Verbindung zwischen der mobilen Computervorrichtung (54) und dem Server (59a) erfolgt, die die Computermaschine (86) umgeht.

8. Das Verfahren gemäß einem der Ansprüche 1 bis 6, wobei die direkte Verbindung (90) einen Proxy (308) aufweist, der auf der Computermaschine (86) ausgeführt wird, der konfiguriert ist zum Assoziieren einer Adresse, die in den Browser (88) eingegeben wird, mit der Host-Anwendung (124).

9. Eine mobile Computervorrichtung (54) zum Vorsehen eines Zugriffs auf eine Anwendung über eine Vielzahl von Computern, die aufweist:
zumindest eine Netzwerkschnittstelle (112) zum Herstellen einer direkten Verbindung (90) zwischen einer Computermaschine (86) und der mobilen Computervorrichtung (54), wobei die zumindest eine Netzwerkschnittstelle mit zumindest einem Server (59a) verbindbar ist, der eine Client-Anwendung (60) speichert;
einen Prozessor (100), der mit der zumindest einen Netzwerkschnittstelle (112) verbunden ist und konfiguriert ist zum:
Ausführen einer Host-Anwendung (124) und Empfangen einer Anforderung an der Host-Anwendung (124) zum Laden einer Webseite von einem Webdienst (300) der Host-Anwendung (124) und Vorsehen der Webseite an einem Browser (88), der auf der Computermaschine (86) ausgeführt wird;
wobei die Webseite eine Verfügbarkeit einer Client-Anwendung (128) zum Empfang an der mobilen Computervorrichtung (54) von dem Server (59a) angibt;
Übertragen der Webseite zur Erzeugung an dem Browser (88);
Empfangen, an der Host-Anwendung (124), einer Anweisung von der Computermaschine (86) zum Initiieren eines Empfangens der Client-Anwendung (128) von dem Server (59a);
Empfangen der Client-Anwendung (128) an der mobilen Computervorrichtung (54).

10. Die mobile Computervorrichtung gemäß Anspruch 9, wobei der Prozessor (100) weiter konfiguriert ist zum Ausführen einer Verwaltungsanwendung (129a) und wobei auf die Client-Anwendung (128), die von dem Server (59a) gespeichert ist, durch die Verwaltungsanwendung (129a) zugegriffen werden kann.

11. Die mobile Computervorrichtung gemäß Anspruch 10, wobei der Prozessor (100) weiter konfiguriert ist zum Installieren oder Upgraden der Client-Anwendung (128) in der mobilen Computervorrichtung (54) unter Verwendung der Verwaltungsanwendung (129a).

12. Die mobile Computervorrichtung gemäß einem der Ansprüche 9 bis 11, wobei die Client-Anwendung (128) eine aus einer Email-Anwendung, einer Kontaktverwaltungsanwendung, einer Kalenderanwendung, einer Memopad-Anwendung, einer Aufgabenanwendung, einer Instant-Messaging-Anwendung oder einer Soziales-Netzwerk-Anwendung aufweist.

13. Die mobile Computervorrichtung gemäß einem der Ansprüche 9 bis 12, wobei das Empfangen der Client-Anwendung (128) über eine Verbindung zwischen der Computermaschine (86) und dem Server (59a) über ein Netzwerk und dann über die direkte Verbindung (90) erfolgt.

14. Die mobile Computervorrichtung gemäß einem der Ansprüche 9 bis 12, wobei das Empfangen der Client-Anwendung (128) über eine Verbindung zwischen der mobilen Computervorrichtung (54) und dem Server (59a) erfolgt, die die Computermaschine (86) umgeht.

15. Die mobile Computervorrichtung gemäß einem der Ansprüche 9 bis 12, wobei die direkte Verbindung (90) einen Proxy (308) aufweist, der auf der Computermaschine (86) ausgeführt wird, der konfiguriert ist zum Assoziieren einer Adresse, die in den Browser (88) eingegeben wird, mit der Host-Anwendung (124).

## Revendications

1. Procédé de commande de la transmission par une application utilisant une pluralité d'orinateurs, comprenant les étapes consistant à :
établir une connexion directe (90) entre une machine informatique (86) et un dispositif informatique mobile (54), le dispositif informatique mobile (54) pouvant être connecté à un serveur (59a) stockant une application cliente (60) et le dispositif informatique mobile (54) étant configuré pour exécuter une application hôte (124) ;
recevoir sur l'application hôte (124) une demande de chargement d'une page web à partir d'un service web (300) de l'application hôte (124) et fournir ladite page web à un navigateur (88) qui s'exécute sur la machine informatique (86), la page web indiquant une disponibilité d'une application cliente (128) pour la transmission entre le serveur (59a) et le dispositif informatique mobile (54) ;
transmettre la page web pour sa reproduction sur le navigateur (88) ;
recevoir sur l'application hôte (124) une instruction provenant de la machine informatique (86) pour lancer une transmission de l'application cliente (128) à partir du serveur (59a) ; et
recevoir l'application cliente (128) sur le dispositif informatique mobile (54).

2. Procédé selon la revendication 1, dans lequel le dispositif informatique mobile est en outre configuré pour exécuter une application de gestion (129a) et dans lequel l'application cliente (128) stockée par le serveur (59a) est accessible à l'application de gestion (129a).

3. Procédé selon la revendication 2, comprenant en outre l'étape consistant à installer l'application cliente (128) sur le dispositif informatique mobile (54) à l'aide de l'application de gestion (129a).

4. Procédé selon la revendication 2 ou la revendication 3, comprenant en outre l'étape consistant à mettre à jour l'application cliente (128) sur le dispositif informatique mobile (54) à l'aide de l'application de gestion (129a).

5. Procédé selon l'une quelconque des revendications 1 à 4, dans lequel l'application cliente (128) consiste en l'une des suivantes : application de courriel, application de gestion de contacts, application d'agenda, application de bloc-notes, application de tâches à réaliser, application de messagerie instantanée ou application de réseautage social.

6. Procédé selon l'une quelconque des revendications 1 à 5, dans lequel la réception de l'application cliente (128) se produit sur une liaison entre la machine informatique (86) et le serveur (59a) via un réseau puis par la connexion directe (90).

7. Procédé selon l'une quelconque des revendications 1 à 5, dans lequel la réception de l'application cliente (128) se produit sur une liaison entre le dispositif informatique mobile (54) et le serveur (59a) qui court-circuite la machine informatique (86).

8. Procédé selon l'une quelconque des revendications 1 à 6, dans lequel la connexion directe (90) comprend un serveur mandataire (308) qui s'exécute sur la machine informatique (86) et qui est configuré pour associer une adresse saisie dans le navigateur (88) et l'application hôte (124).

9. Dispositif informatique mobile (54) destiné à donner accès à une application sur une pluralité d'ordinateurs, comprenant :
au moins une interface de réseau (112) destinée à établir une connexion directe (90) entre une machine informatique (86) et le dispositif informatique mobile (54), ladite au moins une interface de réseau pouvant être connectée à au moins un serveur (59a) qui stocke une application cliente (60) ;
un processeur (100) connecté à ladite au moins une interface de réseau (112) et configuré pour :
exécuter une application hôte (124) et recevoir sur l'application hôte (124) une demande de chargement d'une page web à partir d'un service web (300) de l'application hôte (124), et fournir ladite page web à un navigateur (88) s'exécutant sur la machine informatique (86) ; la page web indiquant une disponibilité d'une application cliente (128) pour recevoir sur le dispositif informatique mobile (54) en provenance du serveur (59a) ;
émettre la page web pour sa reproduction sur le navigateur (88) ;
recevoir sur l'application hôte (124) une instruction provenant de la machine informatique (86) pour lancer une transmission de l'application cliente (128) à partir du serveur (59a) ;
recevoir l'application cliente (128) sur le dispositif informatique mobile (54).

10. Dispositif informatique mobile selon la revendication 9, dans lequel le processeur (100) est en outre configuré pour exécuter une application de gestion (129a) et dans lequel l'application cliente (128) stockée par le serveur (59a) est accessible à l'application de gestion (129a).

11. Dispositif informatique mobile selon la revendication 10, dans lequel le processeur (100) est en outre configuré pour installer ou mettre à jour l'application cliente (128) sur le dispositif informatique mobile (54) à l'aide de l'application de gestion (129a).

12. Dispositif informatique mobile selon l'une quelconque des revendications 9 à 11, dans lequel l'application cliente (128) consiste en l'une des suivantes : application de courriel, application de gestion de contacts, application d'agenda, application de bloc-notes, application de tâches à réaliser, application de messagerie instantanée ou application de réseautage social.

13. Dispositif informatique mobile selon l'une quelconque des revendications 9 à 12, dans lequel la réception de l'application cliente (128) se produit sur une liaison entre la machine informatique (86) et le serveur (59a) via un réseau puis par la connexion directe (90).

14. Dispositif informatique mobile selon l'une quelconque des revendications 9 à 12, dans lequel la réception de l'application cliente (128) se produit sur une liaison entre le dispositif informatique mobile (54) et le serveur (59a) qui court-circuite la machine informatique (86).

15. Dispositif informatique mobile selon l'une quelconque des revendications 9 à 12, dans lequel la connexion directe (90) comprend un serveur mandataire (308) qui s'exécute sur la machine informatique (86) et qui est configuré pour associer une adresse saisie dans le navigateur (88) et l'application hôte (124).
